# NEW EUROPEAN PATENT SPECIFICATION

(11) **EP 3 976 398 B2**
(45) Date of publication and mention of the opposition decision: **20.05.2026**
(45) Mention of the grant of the patent: 21.12.2022
(21) Application number: 20724794.1
(22) Date of filing: 06.05.2020
(51) Int. Cl.: B60C 27/06, B60C 27/10

(54) **ANTI-SKID DEVICE WITH EXTERNAL MOUNTING TO THE HUB OF A WHEEL PARTICULARLY FOR WHEELS WITH ALLOY RIMS**
GLEITSCHUTZEINRICHTUNG ZUR BEFESTIGUNG AN DER RADNABE , SPEZIELL BEI LEICHTMETALLRÄDERN
DISPOSITIF ANTIDÉRAPANT AVEC MONTAGE EXTERNE SUR LE MOYEU D'UNE ROUE EN PARTICULIER POUR LES ROUES AVEC JANTES EN ALLIAGE

(30) Priority: 30.05.2019 IT 201900007662
(43) Date of publication of application: 06.04.2022
(73) Proprietor: KÖNIG S.P.A, 23867 Suello (LC) (IT)
(72) Inventor: NECCHI, Stefano, 23874 Montevecchia (Lecco) (IT)
(74) Representative: Rossi, Ugo
(86) International application number: PCT/EP2020/062592
(87) International publication number: WO 2020/239379

(56) References cited:
- EP-A1- 0 528 506
- EP-A1- 2 050 590
- EP-A1- 2 823 975
- EP-A2- 0 352 874
- EP-B1- 0 528 506
- EP-B1- 2 050 590
- WO-A1-03/011618
- WO-A1-2015/004135
- US-A- 2 517 634

## Description

The present invention relates to an anti-skid device, commonly referred to as a snow chain, for wheels with alloy rims, designed to be mounted from the side of the wheel turned towards the outside of the vehicle.

Snow chains are known with external mounting that comprise a central hub from which a plurality of arms or spokes protrude radially, connected to a terminal element that embraces the tread of the tyre. The terminal elements of the spokes are connected to chain segments that follow the tyre tread. In this way, the chain segments can scratch or score the sleet or ice on the road surface to exert greater friction and prevent the tyres from slipping and skidding.

For the attachment and tensioning of this type of snow chains, the most common solution is to provide an adapter element that is attached to a wheel bolt or nut. The adapter element is attached to the end of a tensioning belt or chain which traverses the hub of the anti-skid device, where means of various type are provided, such as lever, ratchet, or the like, which can be actuated by the user to tension the belt and bring the hub of the anti-skid device closer to the hub of the wheel.

Such a type of snow chain has various disadvantages due to the way in which the tensioning element is fixed to a bolt of the wheel.

In fact, users must normally use a special wrench to screw-fix the adapter device to the bolt. In some cases a lever is provided, fixed to the adapter, to enable the screwing thereof, a lever which remains on the wheel during travel, so that a force acting in the direction opposite to that of screwing on the adapter device would tend to loosen the clamping of the same.

In addition, the fixing of the tensioning element to a bolt of the wheel is somewhat difficult and not entirely reliable.

Moreover, since the bolts for fixing of the wheel are distanced from the centre of the same, and consequently the element of connection to the hub of the anti-skid device is offset with respect to the wheel, this may result in imperfect tensioning and/or mounting of the anti-skid device.

Snow chains of the type described above are known, for example, from WO 03/011618, EP 2050590 and EP 528506.

US 2517634 and EP 35282874 describe other anti-skid devices with external mounting with features according to the preamble of claim 1.

The object of the present invention is to eliminate, or at least reduce, the disadvantages of the prior art illustrated above.

In particular, one object of the invention is to provide an anti-skid device for wheels with alloy rims, i.e. provided with a hole at the hub, closed by a small disk normally bearing the car manufacturer's logo, which is easy and quick to assemble and disassemble.

Another object of the invention is to provide such an anti-skid device wherein the tensioning element is perfectly in axis with the wheel, in such a way as to allow a symmetrical and uniform distribution of the tensioning forces and ensure safety and reliability during travel of the vehicle.

These and other objects are achieved by the anti-skid device according to the invention which has the features of the appended independent claim 1.

Advantageous embodiments of the invention are disclosed by the dependent claims.

Substantially, the anti-skid device with mounting from the outside for wheels, particularly with alloy rims with a central hole, according to the invention, comprises the features of claim 1.

Further features of the invention will be made clearer by the detailed description that follows, referred to its embodiments purely by way of a non-limiting example, illustrated in the accompanying drawings, in which:
Figure 1 is a schematic view in perspective, illustrating the mounting of an anti-skid device fitted with a device for fixing to the rim of the wheel according to a first embodiment of the invention;
Figure 2 is an enlargement showing in particular the connection between the anti-skid device and the fixing device mounted on the wheel before tensioning;
Figure 3 shows schematically a wheel with the device for fixing of the anti-skid device according to the previous figures mounted thereon;
Figures 4 and 5 are schematic perspective views of the fixing device in rest and working condition respectively;
Figures 6 and 7 are axial schematic sections of the fixing device of Figures 4 and 5, respectively, placed in the hole of the hub of a wheel;
Figures 8 and 9 are perspective views of a second embodiment of the fixing device, in rest and working condition respectively;
Figures 10 and 11 are schematic sectioned views of the device of Figures 8 and 9, respectively, mounted on the wheel;
Figures 12 and 13 are schematic views in perspective of a fixing device according to a third embodiment of the invention, in rest and working condition respectively;
Figures 14 and 15 are views in median section of the device of Figures 12 and 13, respectively, mounted on a wheel.

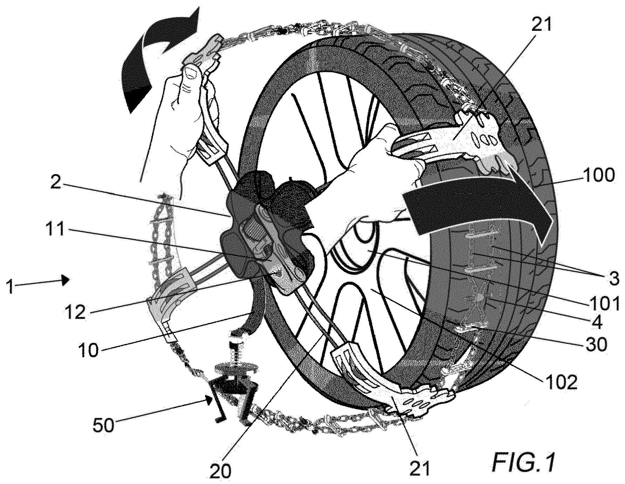

Referring to Figure 1, an anti-skid device according to a first embodiment of the invention, denoted as a whole by reference numeral 1, is shown during the phase of mounting on a wheel 100.

The anti-skid device, or snow chain, 1, comprises a hub or central body 2 intended to be placed at the hub of the wheel. From the central body 2 of the anti-skid device arms or spokes 20 branch off radially. Four arms 20, each consisting of a pair of appropriately shaped metal rods, are shown in the drawings.

The ends of the arms 20 are connected to respective terminal elements 21 bent with a radius of curvature that follows the edge of the tyre, in such a way that the terminal elements 21 can be placed on the tread of the tyre of the wheel. Chain segments 3 are connected to the terminal elements 21 and are arranged in a ring along the tread of the tyre. By way of example, the drawing shows two chain segments 3 arranged substantially parallel one to the other. At appropriate intervals, the chain segments 3 are connected one to the other and held in position by transverse plates 30 which are arranged in a knife pattern on the tread of the tyre, in such a way as to improve friction with the road surface, cutting into the ice or snow.

Between at least some pairs of transverse plates 30 an adjustment device 4 is placed, in itself known, to adapt the chain segments 3 to slightly different wheel diameters or even to compensate the wear of the tyre, which leads to a reduction in wheel diameter.

For the mounting of the anti-skid device 1 to wheel 100 a device is provided for fixing to the central hole 101 of rim 102 of wheel 100.

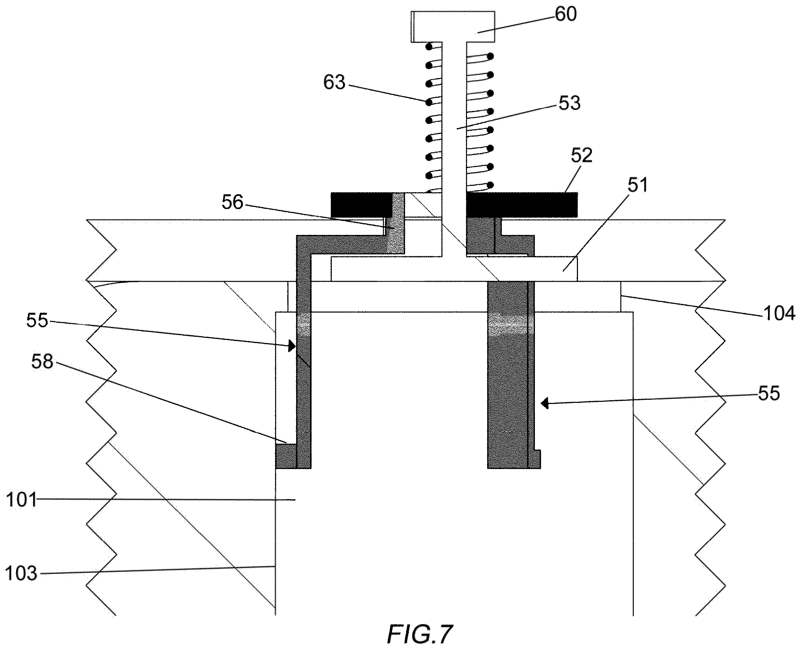

This device, which will be described in greater detail here below, is denoted by reference numeral 50 in Figures 1 to 7, and is connected by means of a belt 10 to a mechanism 11 placed in the central body 2, and through actuation thereof it is possible to tension the anti-skid device.

This mechanism 11 is in itself known and, only by way of example, in Figure 1 it is shown as a ratchet lever, as described for example in European patent EP 2050591, to which reference can be made for further details of the same.

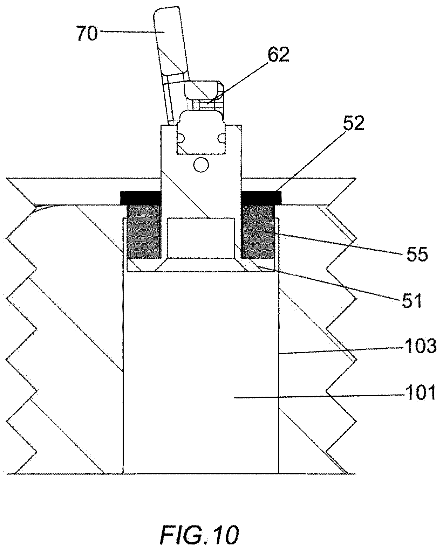

It should also be noted that the connection between the central body 2 of the anti-skid device and the fixing device 50 can be made, instead of with a belt as shown in Figure 10, with a chain or a steel cable

Likewise, this belt 10 is hooked to the fixing device 50 during mounting and it is removable.

Before describing in detail the device for fixing to the wheel, which is a specific subject of the invention, the mounting of the anti-skid device is described in brief.

Referring to Figure 1, the user grasps two spokes 20 of the anti-skid device 1 to mount them on the outer part of wheel 100, placing the ring formed by the chain segments 3 on the tread of the tyre.

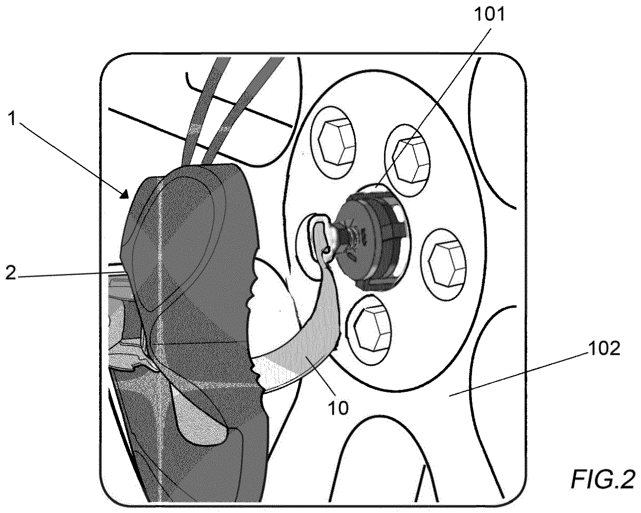

As shown in Figure 2, the operator then grasps the fixing device 50 and locks it in the central hole 101 of the wheel.

Naturally, as device 50 is separated from belt 10 or other element of connection to the central body 2 of the anti-skid device, it will be placed in hole 101 beforehand, and then belt 10 will be hooked thereto.

At this point, the tensioning mechanism 11 is actuated by means of the ratchet lever 12, causing the belt 10 to be shortened, and therefore the central body 2 of the anti-skid device 1 to be brought closer to the hub of the wheel, tensioning in this way the terminal elements 21 of the arms 20 on the tyre.

For dismounting, the procedure is in reverse order, releasing the ratchet tensioning mechanism, so as to cause the belt 10 to loosen, allowing the anti-skid device 1 to move away from the wheel and its removal, following the release of the belt 10 and/or the removal of the fixing device 50.

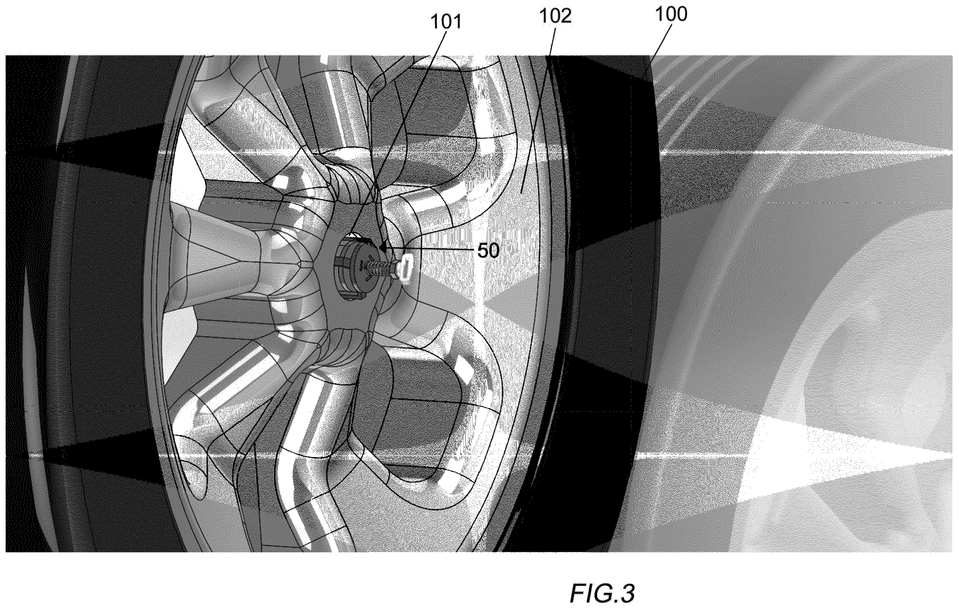

Referring to Figures 3 to 7, fixing device 50 is described according to a first embodiment of the invention.

In Figure 3, fixing device 50 is shown mounted in the central hole 101 of an alloy rim 102 of a wheel 100.

In fact, alloy rims are provided with a blind hole 101 at the hub normally covered by a small disk usually bearing the logo of the car manufacturer of the vehicle, following the removal of which device 50 can be mounted in said hole 101.

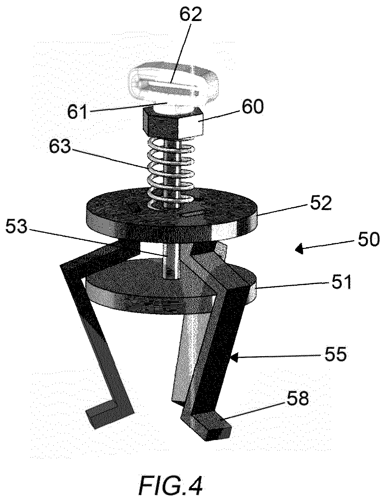

Figures 4 to 7 show in greater detail the structure of fixing device 50 and its mounting in hole 101.

Device 50 comprises a pair of disks 51, 52 parallel to and coaxial one with the other, the lower disk 51 (referring to the drawings) being made integral with the end of a rod 53, at least partially threaded, which traverses a threaded hole 54 provided centrally to the upper disk 52.

The end of the rod 53 can be connected in a fixed manner to the lower disk 51, so that these two elements behave as a monobloc, or connected in such a way that the disk 51 is free to rotate around the rod 53.

Between the two disks 51 and 52 L-shaped tabs 55 are placed (three in number in the example shown), with the ends bent at 90° outwards.

The upper bent ends 56 are housed in corresponding holes 57 formed in the upper disk 52, while the lower bent ends 58 are engaged with the inner wall 103 of the hole 101 during mounting.

At the other end of the rod 53, opposite that of engagement with disk 51, a polygonal head 60 is provided to allow the screwing/unscrewing of the rod 53. On the head 60 a small pin 61 is provided, which can be optionally pivotally mounted with respect to the head 60, carrying an eyelet 62 for the insertion of the belt 10.

Naturally the shape of the head 60 and of the small pin 61 with eyelet 62 is purely indicative, as these elements can take on other forms suitable for the purposes, i.e. the rotation of the rod 53 and the engagement of the connecting element 10 with the central body 2 of the anti-skid device.

A pressure spring 63 that acts between head 60 and upper disk 52 can also be provided on rod 53.

Figure 4 shows device 50 in a non-operational condition, with tabs 55 in "loosened" condition.

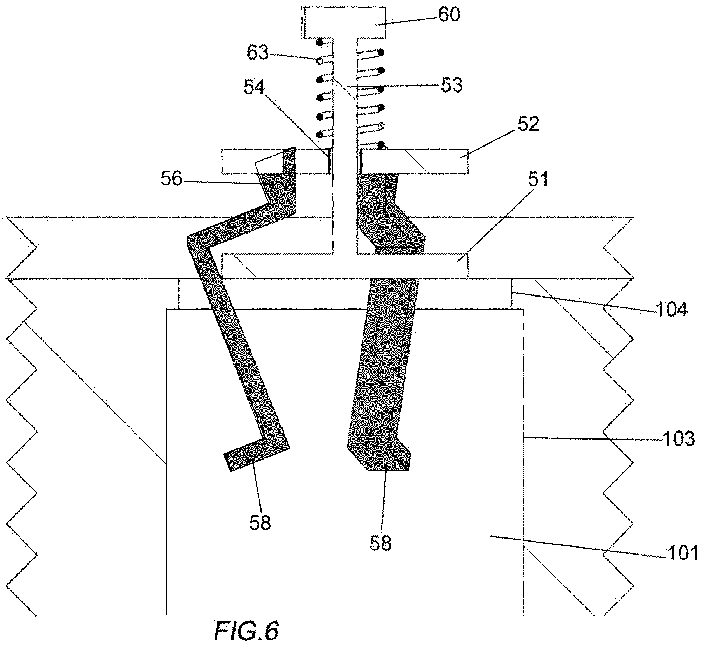

In this condition, device 50 is positioned against the hub of the wheel, inserting the tabs 55 in the hole 101, as shown in Figure 6.

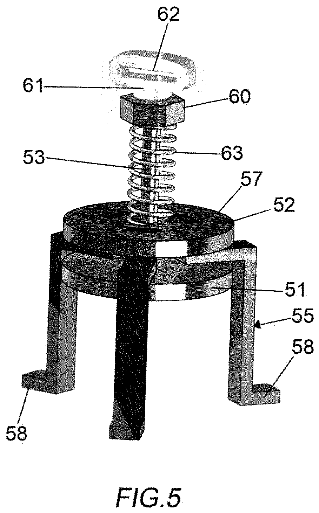

In this condition, by rotating the threaded rod 53 in the direction of screwing in the threaded hole 54 of the upper disk 52, since this disk is prevented from rotating, a backward movement of the lower disk 51 is produced, and therefore its moving closer to the upper disk 52, with consequent expansion of the tabs 55, as shown in Figure 5, which go to engage with the inner surface 103 of the hole 101 producing the locking of device 50 in the hole 101 following tight tightening.

A possible unhooking of device 50 from hole 101 is prevented, as well as by the strong engagement of the bent ends 58 of the tabs 55 with the inner surface 103 of hole 101, by an inner perimeter protrusion 104, normally provided for the hooking of the cover disk (removed), against which the bent ends 58 of the tabs 55 would abut.

In Figures 4 and 6 the bent ends 58 of tabs 55 are shown at a certain distance from the perimeter protrusion 104, but in practice they are closer to protrusion 104, or in any case they can be made in such a way as to be closer to protrusion 104 or even to abut against it.

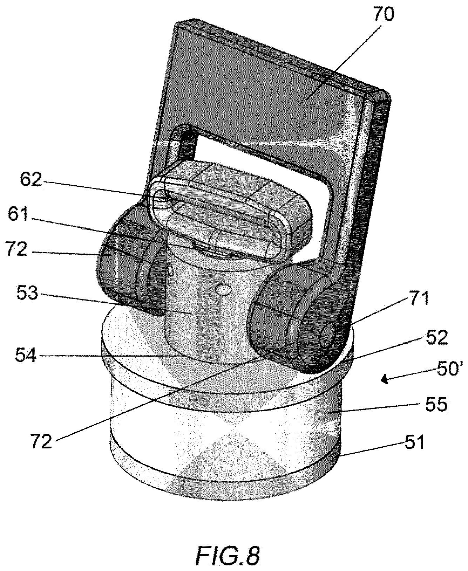

The spring 63 can contribute to avoiding any unscrewing of the rod 53 after mounting. Referring to Figures 8 to 11, a description is now given of a second embodiment of the fixing device, denoted by reference numeral 50', using the same reference numerals of the previous embodiment to distinguish identical or similar parts.

The device 50' again comprises two parallel and coaxial disks 51, 52, with a rod 53 attached to the lower disk 51 and traversing a smooth hole 54 provided centrally to the upper disk 52.

Around the rod 53, which in this case is shown to have a larger diameter with respect to the rod 53 of the previous embodiment, a toroidal expandable elastic element 55 is arranged.

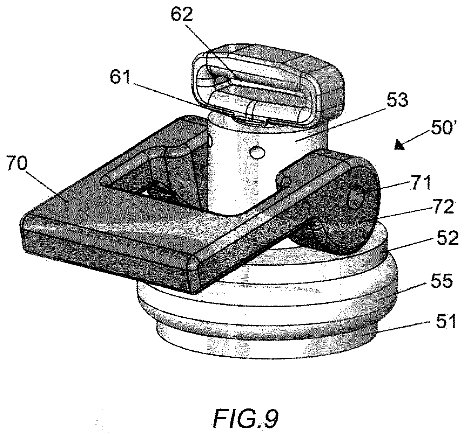

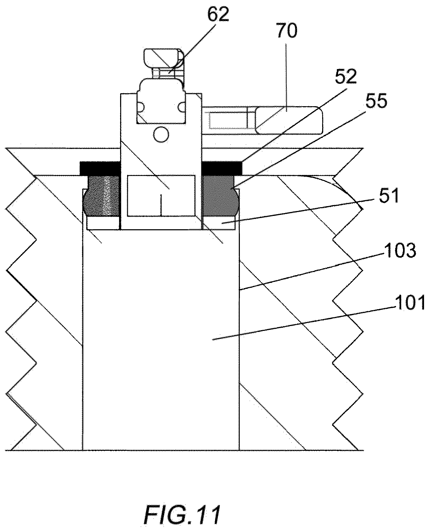

At the section of the rod 53 protruding beyond the upper disk 52 a lever 70 is hinged, having, at the hinge axis 71, a pair of cam profiles 72 in contact with the upper disk 52. The cam profiles 72 are such that rotating lever 70 from the position shown in Figures 8 and 10 to the position shown in Figures 9 and 11 causes the lower disk 51 to move closer to the upper disk 52 and therefore the expansion of the elastic element 55, which goes to abut against the inner wall 103 of the hole 101, producing the locking of the fixing device 50' in the hole 101.

In this embodiment, at the top of the rod 53 a small pin 61 is shown again with eyelet 62 for the attachment of the belt 10, or generic connecting element, to the central body 2 of the anti-skid device 1.

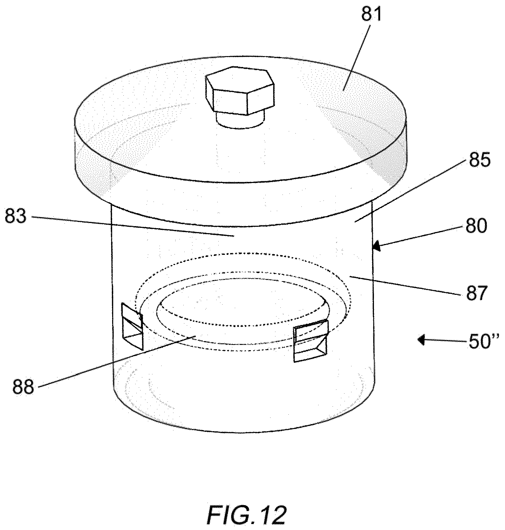

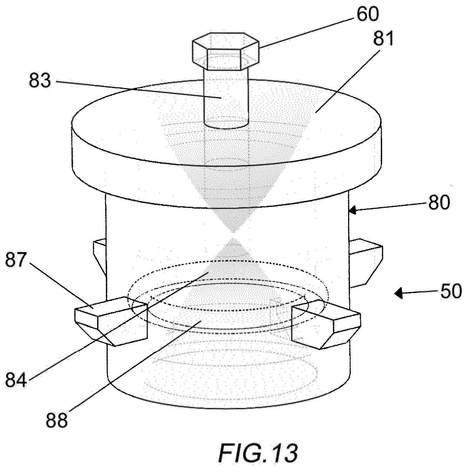

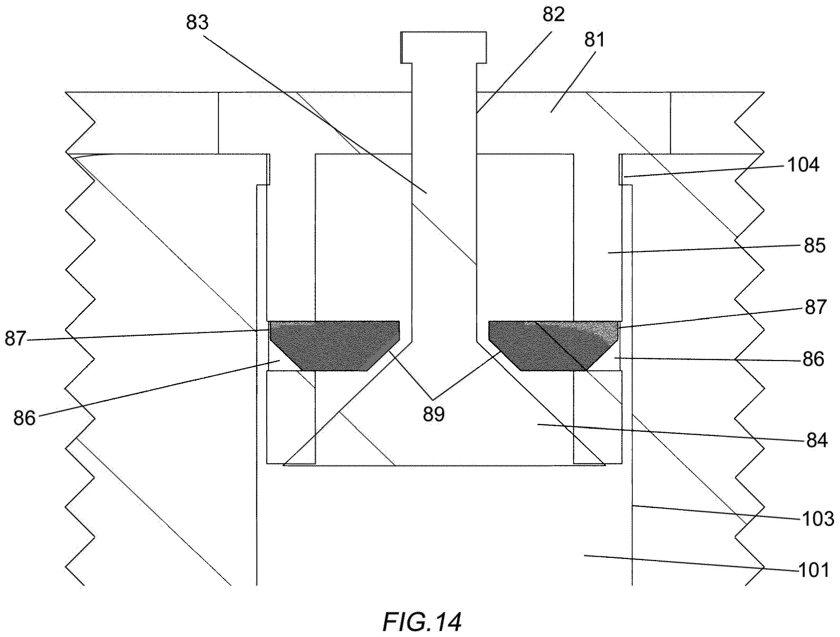

Figures 12 to 15 show a third embodiment of the fixing device denoted by reference numeral 50".

This device comprises a hollow cylinder 80, open below and having a widened upper base 81, having a central threaded hole 82 in which a rod 83, at least partially threaded, carrying a conical body 84 below, is engaged.

In the side wall 85 of the hollow cylinder 80 holes 86 are provided (four in number in the accompanying drawings, arranged at 90° one in relation to the other), in which blocks 87 are housed, held together by a toroidal rubber ring 88, which traverses them. The blocks 87 have an internal bevel 89 with an inclination corresponding to that of the conical body 84.

In the accompanying drawings a similar bevel is also provided on the outer side of blocks 87, in such a way that they are perfectly symmetrical, and their mounting can be simplified.

At the upper end of the rod 83 a polygonal head 60 is provided with small pin 61 and eyelet 62 (not shown in the drawings), as in previous embodiments.

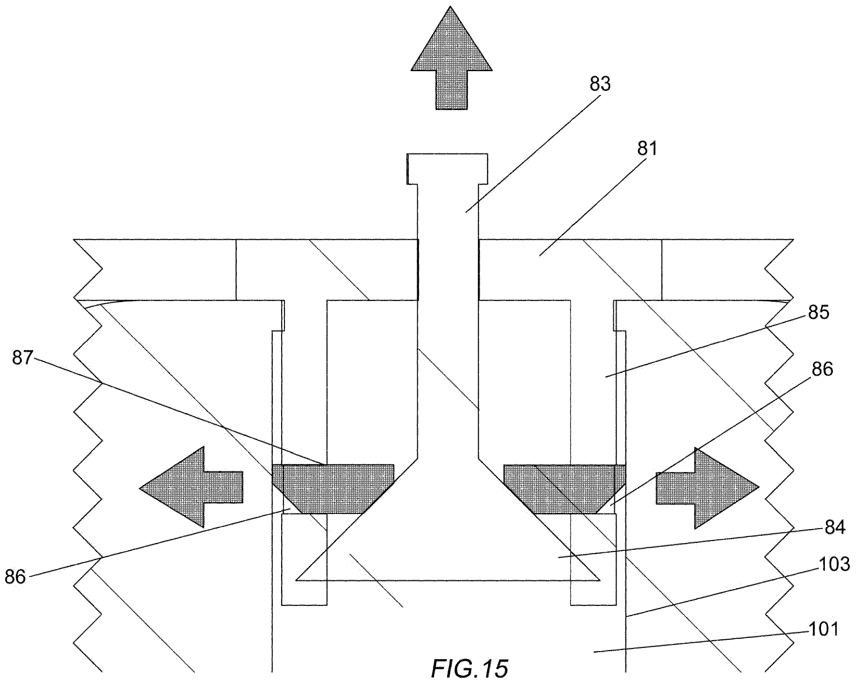

A rotation of the threaded rod 83, in engagement with the threaded hole 82 of the base 81 of the hollow cylinder 85, produces a lifting of the conical body 84, which slides against the inclined surfaces 89 of the blocks 87, producing the release thereof from the cylinder and the engagement against the inner surface 103 of the hole 101 (Figure 15) determining the locking of the fixing device 50".

From what has been disclosed above, the advantages of the snow chain according to the invention are clear, whose device for fixing to the wheel can be easily mounted in the central hole of an alloy rim, ensuring uniform tensioning of the chain.

Naturally the invention is not limited to the particular embodiments previously described and illustrated in the accompanying drawings, but numerous detailed changes can be made thereto by the person skilled in the art, without thereby departing from the scope of the invention itself, as defined in the appended claims.

## Claims

1. Anti-skid device (1) with mounting from the outside for wheels (100), particularly with alloy rims (102) provided with central hole (101), comprising:
- a central body (2) intended to be placed at the hub of a wheel on which the anti-skid device is to be mounted,
- a plurality of arms (20) protruding radially from said central body (2) and ending in terminal elements (21) intended to be placed on the tyre tread,
- chain segments (3) connected to said terminal elements (21) so as to form a ring on the tyre tread,
- a device (50, 50', 50") suitable for being fixed to said rim (102) of the wheel (100);
- a connection element (10) between said device (50, 50', 50") and said central body (2) of the anti- skid device, and
- a tensioning mechanism (11) arranged in said central body (2) that can be actuated to pull said connecting element (10) and bring the central body (2) closer to the wheel hub, **characterised in that** said device (50, 50', 50") is an expansion device and intended to be fixed in said central hole (101) of the rim (102) of the wheel,
wherein the device (50, 50', 50") is separated from the connection element (10), so that the device (50. 50'. 50") can be placed in the central hole (101) before the connection element (10) is hooked thereto, wherein the connection element is a belt, a chain or a steel cable.

2. Anti-skid device according to claim 1, **characterised in that** said expansion fixing device (50, 50') comprises a pair of parallel and coaxial disks (51, 52), at least one expandable element (55) placed between them, a rod (53) having one end connected to a first (51) of said disks and traversing a central hole (54) in a second (52) of said disks, means of manual actuation of said rod (53) to cause the approach between said disks (51, 52) and therefore the expansion of said expandable element (55).

3. Anti-skid device according to claim 2, wherein said expansion fixing device (50) comprises a plurality of expandable elements (55) in the form of L-shaped tabs with ends (56, 58) bent outwards, the first ends (56) housed in corresponding holes (57) in said second disk (52), and the second ends (58) engaging with the inner wall (103) of said hole (101) in condition of use of the device, said rod (53) being at least partially threaded and engaging with said hole (54), also threaded, provided in said second disk (52) to cause the approaching or distancing between said disks (51, 52) and therefore the expansion or the retraction of said tabs (55).

4. Anti-skid device according to claim 3, wherein said rod (53) has a head (60) and a spring (63) is arranged around the rod (53), acting between said head (60) and said second disk (52).

5. Anti-skid device according to claim 2, wherein said expansion fixing device (50') comprises an elastically expandable toroidal element (55) arranged around said rod (53) between said two disks (51, 52), a pivoting lever (70) having cam profiles (72) at the hinge axis (71), in contact with second disk (52), being hinged to the section of said rod (53) projecting externally from said second disk (52), such that a rotation of the lever (70) causes said disks (51, 52) to come closer together and therefore the expansion of said toroidal elastic element (55).

6. Anti-skid device according to claim 1, wherein said expansion fixing device (50") comprises a hollow cylinder (80), open on one side and having a widened base (81) able to abut against the rim (102 ) of the wheel in use condition, centrally to said base (81) a threaded hole (82) being provided, with which a rod (83), at least partially threaded, engages, having an end projecting externally from said base (81) and carrying at the other end a conical body (84) housed in said hollow cylinder (80), in the side wall (85) of the cylinder (80), through holes (86) being provided, housing respective blocks (87) having internally a bevel (89) with the same inclination of said conical body (84), so that a displacement of said conical body (84) towards said blocks (87) caused by the screwing of said rod (83) produces the radial expansion of said blocks (87) and their engagement with the inner wall (103) of said hole (101).

7. Anti-skid device according to claim 6, wherein said blocks (87) are joined one to the other by an elastic toroidal element (88) which traverses them.

8. Anti-skid device according to any one of the preceding claims, wherein said element (10) connecting the fixing device (50, 50', 50") and the central body (2) of the anti-skid device, is a belt, a chain, a metal cable or the like.

9. Anti-skid device according to any one of the preceding claims, wherein a small pin (61) with an eyelet (62) is provided at the free end of said rod (53, 83) for engagement of said connecting element (10).

## Patentansprüche

1. Gleitschutzvorrichtung (l) mit Montage von außen für Räder (100), insbesondere mit Leichtmetallfelgen (102), die mit einem zentralen Loch (101) versehen sind, umfassend:
- einen Zentralkörper (2), der dazu bestimmt ist, an der Nabe eines Rades angeordnet zu werden, an dem die Gleitschutzvorrichtung montiert werden soll,
- eine Vielzahl von Armen (20), die von dem Zentralkörper (2) radial vorstehen und in Endelementen (21) enden, die dazu bestimmt sind, auf der Lauffläche des Reifens angeordnet zu werden,
- Kettensegmente (3), die mit den Endelementen (21) verbunden sind, um einen Ring auf der Lauffläche des Reifens zu bilden,
- eine Vorrichtung (50, 50', 50"), die geeignet ist, an der Felge (102) des Rades (100) befestigt zu werden;
- ein Verbindungselement (10) zwischen der Vorrichtung (50, 50', 50") und dem Zentralkörper (2) der Gleitschutzvorrichtung und
- einen Spannmechanismus (11), der in dem Zentralkörper (2) angeordnet ist und betätigt werden kann, um das Verbindungselement (10) zu ziehen und den Zentralkörper (2) näher an die Radnabe zu bringen,
**dadurch gekennzeichnet, dass** die Vorrichtung (50, 50', eine Expansionsvorrichtung ist und dazu bestimmt ist, in dem zentralen Loch (101) der Felge (102) des Rades befestigt zu werdenwobei die Vorrichtung (50, 50', 50") vom Verbindungselement (10) getrennt ist, sodass die Vorrichtung (50, 50', 50") in die zentrale Loch (101) eingesetzt werden kann, bevor das Verbindungselement (10) daran eingehängt wird, wobei das Verbindungselement ein Gurt, eine Kette oder ein Stahlseil ist.

2. Gleitschutzvorrichtung nach Anspruch 1, **dadurch gekennzeichnet, dass** die Expansionsbefestigungsvorrichtung (50, 50') ein Paar paralleler und koaxialer Scheiben (51, 52), mindestens ein zwischen ihnen angeordnetes expandierbares Element (55), eine Stange (53), die ein mit einer ersten (51) der Scheiben verbundenes Ende aufweist und ein zentrales Loch (54) in einer zweiten (52) der Scheiben durchquert, Mittel zur manuellen Betätigung der Stange (53) umfasst, um die Annäherung zwischen den Scheiben (51, 52) und somit die Expansion des expandierbaren Elements (55) zu bewirken.

3. Gleitschutzvorrichtung nach Anspruch 2, wobei die Expansionsbefestigungsvorrichtung (50) eine Vielzahl von expandierbaren Elementen (55) in Form von L-förmigen Laschen mit nach außen gebogenen Enden (56, 58) umfasst, wobei die ersten Enden (56) in entsprechenden Löchern (57) in der zweiten Scheibe (52) untergebracht sind und die zweiten Enden (58) im Gebrauchszustand der Vorrichtung mit der Innenwand (103) des Lochs (101) in Eingriff stehen, wobei dieStange (53) zumindest teilweise mit einem Gewinde versehen ist und mit dem ebenfalls mit einem Gewinde versehenen Loch (54) in Eingriff steht, das in der zweiten Scheibe (52) vorgesehen ist, um die Annäherung oder Beabstandung zwischen den Scheiben (51, 52) und somit die Expansion oder die Retraktion der Laschen (55) zu bewirken.

4. Gleitschutzvorrichtung nach Anspruch 3, wobei die Stange (53) einen Kopf (60) aufweist und eine Feder (63) um die Stange (53) herum angeordnet ist, die zwischen dem Kopf (60) und der zweiten Scheibe (52) wirkt.

5. Gleitschutzvorrichtung nach Anspruch 2, wobei die Expansionsbefestigungsvorrichtung (50) ein elastisch expandierbares ringförmiges Element (55) umfasst, das um die Stange (53) herum zwischen den beiden Scheiben (51, 52) angeordnet ist, wobei ein Schwenkhebel (70) mit Nockenprofilen (72) an der Gelenkachse (71) in Kontakt mit der zweiten Scheibe (52) steht und an dem Abschnitt der Stange (53) angelenkt ist, der von der zweiten Scheibe (52) nach außen vorsteht, so dass eine Drehung des Hebels (70) eine gegenseitige Annäherung der Scheiben (5 1, 52) und damit die Expansion des elastischen ringförmigen Elements (55) bewirkt.

6. Gleitschutzvorrichtung nach Anspruch 1, wobei die Expansionsbefestigungsvorrichtung (50") einen Hohlzylinder (80) umfasst, der auf einer Seite offen ist und eine verbreiterte Basis (81) aufweist, die in der Lage ist, im Gebrauchszustand an der Felge (102) des Rades anzuliegen, wobei mittig zu der Basis (81) ein Gewindeloch (82) vorgesehen ist, in das eine Stange (83), die mindestens teilweise mit einem Gewinde versehen ist, eingreift, die ein Ende aufweist, das von der Basis (81) nach außen vorsteht und am anderen Ende einen konischen Körper (84) trägt,der in dem Hohlzylinder (80) untergebracht ist, wobei in der Seitenwand (85) des Zylinders (80) Durchgangslöcher (86) vorgesehen sind, die entsprechende Blöcke (87) aufnehmen, die innen eine Abschrägung (89) mit der gleichen Neigung wie der konische Körper (84) aufweisen, so dass eine durch das Einschrauben der Stange (83) verursachte Verschiebung des konischen Körpers (84) in Richtung der Blöcke (87) die radiale Expansion der Blöcke (87) und ihren Eingriff mit der Innenwand (103) des Lochs (101) bewirkt.

7. Gleitschutzvorrichtung nach Anspruch 6, **dadurch gekennzeichnet, dass** die Blöcke (87) durch ein elastisches ringförmiges Element (88), das sie durchquert, miteinander verbunden sind.

8. Gleitschutzvorrichtung nach einem der vorstehenden Ansprüche, **dadurch gekennzeichnet, dass** das Element (10), das die Befestigungsvorrichtung (50, 50', 50") und den Zentralkörper (2) der Gleitschutzvorrichtung verbindet, ein Gurt, eine Kette, ein Metallkabel oder dergleichen ist.

9. Gleitschutzvorrichtung nach einem der vorstehenden Ansprüche, wobei am freien Ende der Stange (53, 83) ein kleiner Stift (61) mit einer Ose (62) zum Eingriff in das Verbindungselement (10) vorgesehen ist.

## Revendications

1. Dispositif antidérapant (1) à montage par l'extérieur pour des roues (100), en particulier ayant des jantes en alliage (102) munies d'un trou central (101), comprenant:
- un corps central (2) destiné à être placé au niveau du moyeu d'une roue sur laquelle le dispositif antidérapant doit être monté,
- une pluralité de bras (20) faisant saillie radialement à partir dudit corps central (2) et se finissant par des éléments terminaux (21) destinés à être placés sur la bande de roulement du pneu,
- des segments de chaîne (3) reliés auxdits éléments terminaux (21) de façon à former un anneau sur la bande de roulement du pneu,
- un dispositif (50, 50', 50") approprié pour être fixé à ladite jante (102) de la roue (100),
- un élément de liaison (10) entre ledit dispositif (50, 50', 50") et ledit corps central (2) du dispositif antidérapant, et
- un mécanisme de mise en tension (11) agencé dans ledit corps central (2) qui peut être actionné pour tirer ledit élément de liaison (10) et amener le corps central (2) plus près du moyeu de roue,
**caractérisé en ce que** ledit dispositif (50, 50', 50") est un dispositif à expansion et est destiné à être fixé dans ledit trou central (101) de la jante (102) de la roue,
dans lequel ledit dispositif (50, 50', 50") est séparé de ledit élément de liaison (10), de manière à pouvoir être placé dans le trou central (101) avant que ledit élément de liaison (10) ne soit accroché à celui-ci, ledit élément de liaison étant une courroie, une chaîne ou un câble en acier.

2. Dispositif antidérapant selon la revendication 1, **caractérisé en ce que** ledit dispositif de fixation par expansion (50, 50') comprend une paire de disques (51, 52) parallèles et coaxiaux, au moins un élément expansible (55) placé entre eux, une tige (53) ayant une extrémité reliée à un premier disque (51) parmi lesdits disques et traversant un trou central (54) dans un second disque (52) parmi lesdits disques, des moyens d' actionnement manuel de ladite tige (53) pour provoquer le rapprochement entre lesdits disques (51, 52) et par conséquent l'expansion dudit élément expansible (55).

3. Dispositif antidérapant selon la revendication 2, dans lequel ledit dispositif de fixation par expansion (50) comprend une pluralité d'éléments expansibles (55) sous la forme de languettes façonnées en L ayant des extrémités (56, 58) cintrées vers l'extérieur, les premières extrémités (56) étant logées dans des trous (57) correspondants dans ledit second disque (52), et les secondes extrémités (58) venant en prise avec la paroi interne (103) dudit trou (101) en condition d'utilisation du dispositif, ladite tige (53) étant au moins partiellement filetée et venant en prise avec ledit trou (54), également fileté, ménagé dans ledit second disque (52) pour provoquer le rapprochement ou la distanciation entre lesdits disques (51, 52) et par conséquent l'expansion ou la rétraction desdites languettes (55).

4. Dispositif antidérapant selon la revendication 3, dans lequel ladite tige (53) possède une tête (60) et un ressort (63) est agencé autour de la tige (53), agissant entre ladite tête (60) et ledit second disque (52).

5. Dispositif antidérapant selon la revendication 2, dans lequel ledit dispositif de fixation par expansion (50') comprend un élément toroïdal (55) élastiquement expansible agencé autour de ladite tige (53) entre lesdits deux disques (51, 52), un levier pivotant (70) ayant des profils de came (72) au niveau de l'axe d'articulation (71), en contact avec le second disque (52), étant articulé par rapport à la section de ladite tige (53) faisant saillie de manière externe à partir dudit second disque (52), de sorte qu'une rotation du levier (70) provoque le fait que lesdits disques (51, 52) viennent plus près l'un de l'autre et par conséquent l'expansion dudit élément élastique toroïdal (55).

6. Dispositif antidérapant selon la revendication 1, dans lequel ledit dispositif de fixation par expansion (50") comprend un cylindre creux (80), ouvert sur un côté et ayant une base élargie (81) apte à venir en butée contre la jante (102) de la roue en condition d'utilisation, de manière centrale à ladite base (81) un trou fileté (82) étant ménagé, avec lequel une tige (83), au moins partiellement filetée, vient en prise, ayant une extrémité faisant saillie de manière externe à partir de ladite base (81) et portant à l'autre extrémité un corps conique (84) logé dans ledit cylindre creux (80), dans la paroi latérale (85) du cylindre (80), des trous traversants (86) étant ménagés, logeant des blocs (87) respectifs ayant de manière interne un biseau (89) avec la même inclinaison dudit corps conique (84), de sorte qu'un déplacement dudit corps conique (84) vers lesdits blocs (87) provoqué par le vissage de ladite tige (83) produise l'expansion radiale desdits blocs (87) et leur mise en prise avec la paroi interne (103) dudit trou (101).

7. Dispositif antidérapant selon la revendication 6, dans lequel lesdits blocs (87) sont joints les uns aux autres par un élément toroïdal élastique (88) qui les traverse.

8. Dispositif antidérapant selon l'une quelconque des revendications précédentes, dans lequel ledit élément (10) reliant le dispositif de fixation (50, 50', 50") et le corps central (2) du dispositif antidérapant est une courroie, une chaîne, un càble métallique ou similaires.

9. Dispositif antidérapant selon l'une quelconque des revendications précédentes, dans lequel une petite broche (61) ayant un œillet (62) est ménagée à l'extrémité libre de ladite tige (53, 83) pour la mise en prise dudit élément de liaison (10).
